# EUROPÄISCHE PATENTSCHRIFT

(11) **EP 2 210 218 B1**
(45) Veröffentlichungstag und Bekanntmachung des Hinweises auf die Patenterteilung: **31.08.2011**
(21) Anmeldenummer: 08849412.5
(22) Anmeldetag: 04.11.2008
(51) Int. Cl.: G06K 19/06, G06K 19/077, G06K 19/08, G09F 5/04, G09F 9/302, G09F 9/35, G06K 19/14, G06K 19/18

(54) **DOKUMENT MIT EINER INTEGRIERTEN ANZEIGEVORRICHTUNG**
DOCUMENT COMPRISING AN INTEGRATED DISPLAY DEVICE
DOCUMENT AVEC UN DISPOSITIF D'AFFICHAGE INTÉGRÉ

(30) Priorität: 12.11.2007 DE 102007000887
(43) Veröffentlichungstag der Anmeldung: 28.07.2010
(73) Patentinhaber: Bundesdruckerei GmbH, 10958 Berlin (DE)
(72) Erfinder: FRITZE, Frank, 12487 Berlin (DE); FISCHER, Jörg, 13053 Berlin (DE); PAESCHKE, Manfred, 16348 Wandlitz (DE); PFLUGHOEFFT, Malte, 13347 Berlin (DE); MUTH, Oliver, 12277 Berlin (DE)
(74) Vertreter: Richardt Patentanwälte
(86) Internationale Anmeldenummer: PCT/EP2008/064919
(87) Internationale Veröffentlichungsnummer: WO 2009/062861

(56) Entgegenhaltungen:
- EP-A- 0 713 197
- DE-A1-102005 052 070
- FR-A- 2 842 339
- US-A1- 2003 214 475

## Beschreibung

Die Erfindung betrifft ein Dokument, insbesondere ein Wert- oder Sicherheitsdokument, mit einer integrierten Anzeigevorrichtung, ein Lesegerät und ein Verfahren zur Verifikation eines Dokuments.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurierten, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlosselungs-Software in der Anzeigeelektronik gespeichert ist. Weitere elektronische Kraftfahrzeug-Kennzeichen sind bekannt aus US 5,657,008 und US 2007/0285361 A1.

Aus US 2003/214475 A1, das den Oberbegriff des Anspruchs 1 bildet, ist eine Anzeige mit einem statischen und einem dynamischen Anzeigemedium bekannt.

Aus EP 0713197 A ist ein Datenträger und ein Schreib-/Lesegerät für einen solchen Datenträger bekannt. Der Datenträger hat einen Informationsstreifen mit optisch lesbaren Markierungen.

Der Erfindung liegt dem gegenüber die Aufgabe zu Grunde, ein verbessertes Dokument, ein Lesegerät für ein Dokument und ein Verfahren zur Verifikation eines Dokuments zu schaffen.

Die der Erfindung zu Grunde liegenden Aufgaben werden jeweils mit den Merkmalen der unabhängigen Patentansprüche gelöst, Ausführungsformen der Erfindung sind in den abhängigen Patentansprüchen angegeben.

Ausführungsformen eines erfindungsgemäßen Dokuments haben eine integrierte Anzeigevorrichtung, einen elektronischen Speicher zur Speicherung erster Daten und Ansteuerungsmittel zur Ansteuerung der Anzeigevorrichtung für eine Wiedergabe der ersten Daten. Die Anzeigevorrichtung hat eine sogenannte Black Matrix.

Unter einer Black Matrix wird allgemein eine Matrix verstanden, die die Zwischenräume zwischen den Anzeigeelementen einer Anzeigevorrichtung abdeckt. Bei einer monochromen Anzeigevorrichtung wird durch jedes der Anzeigeelemente ein sogenannter Pixel gebildet. Bei einer farbigen Anzeigevorrichtung wird dagegen durch jedes Anzeigeelement ein sogenannter Sub-Pixel eines farbigen Bildelements gebildet. Üblicherweise hat jedes farbige Bildelement zumindest drei verschiedenfarbige Sub-Pixel. Durch die Black Matrix werden also die Zwischenräume zwischen den Pixeln bzw. den Sub-Pixeln verdeckt. Eine Black Matrix dient daher der Kontrasterhöhung bei Displays. Verschiedene Ausführungsformen einer Black Matrix sind beispielsweise bekannt aus US 5,666,177 und US 2007/0236141 A1.

Erfindungsgemäß hat die Black Matrix der in das Dokument integrierten Anzeigevorrichtung ein Muster. Abweichend vom Stand der Technik ist also die Black Matrix nicht überall einheitlich schwarz ausgebildet, sondern kann ein Muster beinhalten, dass beispielsweise aus Abschnitten unterschiedlicher Grauwerte und/oder Farbwerte gebildet wird. Insbesondere kann eine übliche Black Matrix als Schicht der Anzeigevorrichtung, d.h. eines sog. Displays, ausgebildet sein.

Nach Ausführungsformen der Erfindung kann die Black-Matrix-Schicht entweder auf das fertige Display aufgebracht werden oder während des Displayfertigungsprozesses eingebracht werden. Die Black-Matrix-Schicht kann auch als separate Folie nachträglich auf das Display aufgebracht werden und mittels geeigneter Fügetechnik innig mit dem Display verbunden werden, zum Beispiel mittels Kleben oder Laminieren.

Zur Herstellung der Black-Matrix-Schicht können folgende Verfahren angewendet werden:
- -: ein nasschemischer Prozess, zum Beispiel Fotolithografische Schicht- strukturierung mittels Maskentechnik,
- -: Laserablation,
- -: physikalische Gasphasenabscheidung (physical vapour deposition, PVD), chemische Gasphasenabscheidung (chemical vapor deposition, CVD) oder verwandte Verfahren,
- -: Drucktechnik, z.B. Hochdruck, Flachdruck, Tiefdruck, Durchdruck oder Digital- druck; besonders bevorzugt erfolgt die Herstellung der Black Matrix mittels Tin- tenstrahldruck, da hier keine Masken, Druckplatten oder -siebe erforderlich sind und leicht personalisiere Informationen aufgebracht werden können.

Das Muster kann durch lokale Variationen des Grauwerts der Black Matrix gebildet werden. Insbesondere kann die Black Matrix Abschnitte mit einem reduzierten Grauwert aufweisen. Durch die Grauwerte, die Größe, die Form und/oder die räumliche Anordnung dieser Abschnitte können zweite Daten in dem Muster codiert sein.

Nach einer Ausführungsform der Erfindung kann das Muster durch lokale Variationen der Farbwerte der Black Matrix gebildet werden. Beispielsweise hat die Black Matrix Abschnitte, die einen von einem Grundfarbton der Black Matrix abweichenden Farbwert aufweisen. Durch die Farbwerte der Abschnitte, die Form, Größe und/oder räumliche Anordnung der Abschnitte in der Black Matrix können zweite Daten in dem Muster codiert sein.

Aufgrund des Farbtons der Black Matrix und/oder der lokalen Variationen der Farbwerte kann sich ein Farbstich der Anzeigevorrichtung ergeben. Die Ansteuerungsmittel können dann so ausgebildet sein, dass sie diesen Farbstich durch entsprechende Ansteuerung der Anzeigeelemente kompensieren. Wenn beispielsweise die Black Matrix einen roten Grundton aufweist, so werden die Anzeigeelemente zur Wiedergabe der Farbe Rot von den Ansteuerungsmitteln mit einem reduzierten Intensitätswert angesteuert, um die Rotstichigkeit der Anzeigevorrichtung zu kompensieren.

Nach einer Ausführungsform der Erfindung erstreckt sich das Muster nur über einen Teilbereich der Anzeigevorrichtung. Dies erhöht die Fälschungssicherheit noch weiter, da ein Fälscher für die Nachstellung des Dokuments nicht ohne weiteres wissen kann, wo sich dieser Teilbereich der Anzeigevorrichtung befindet.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Die ersten Daten können verschiedene Inhalte beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, Barcodes, ein Kennzeichen, insbesondere ein Kraftfahrzeugkennzeichen, einen Fahrzeugparameter, einen Gebührenstatus und dergleichen.

Nach einer Ausführungsform der Erfindung beinhalten die zweiten Daten eine Information, wie zum Beispiel eine Personalisierungsinformation, ein Sicherheitsmerkmal und/oder einen kryptographischen Schlüssel. Alternativ oder zusätzlich können die zweiten Daten ein Kraftfahrzeugkennzeichen, einen Fahrzeugparameter, und/oder einen Gebührenstatus beinhalten.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der zweiten Daten im Klartext auf der Anzeigevorrichtung angezeigt werden.

Nach einer Ausführungsform der Erfindung handelt es sich bei dem Muster um ein Sicherheitsmerkmal, wie zum Beispiel ein Wappen, Siegel oder dergleichen. Dieses Muster kann z.B. mit einer Lupe betrachtet oder mit einem optischen Sensor eines Lesegeräts erfasst werden.

Nach einer Ausführungsform der Erfindung handelt es sich bei der in dem Muster codierten Information um einen kryptographischen Schlüssel. Bei dem kryptographischen Schlüssel kann es sich um einen symmetrischen oder um einen asymmetrischen Schlüssel handeln. Der kryptographische Schlüssel wird von dem Lesegerät erfasst, so dass das Lesegerät zusammen mit dem Dokument ein kryptographisches Protokoll ausführen kann.

Nach einer Ausführungsform der Erfindung hat das Dokument einen geschützten Speicherbereich, in dem dritte Daten gespeichert sind. Ferner hat das Dokument eine Schnittstelle für einen lesenden Zugriff des Lesegeräts auf diese dritten Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Bedingung für einen Lesezugriff des Lesegeräts auf die dritten Daten ist die zuvorige erfolgreiche Ausführung des kryptographischen Protokolls. Bei dem kryptographischen Protokoll kann es sich zum Beispiel um ein sogenanntes Challenge-Response Verfahren handeln. Durch das kryptographische Protokoll werden die dritten Daten gegen unerlaubte Zugriffe geschützt. Dies ist besonders vorteilhaft, wenn es sich bei den dritten Daten um sensitive Daten handelt, wie zum Beispiel biometrische Daten, insbesondere Fingerabdruckdaten oder Iris-Scandaten des Trägers des Dokuments.

Unter einem Dokument" werden erfindungsgemäß beispielsweise Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

In einem weiteren Aspekt betrifft die Erfindung ein Lesegerät für ein Dokument. Das Lesegerät hat einen Sensor zur Erfassung des Musters der Anzeigevorrichtung. Nach einer Ausführungsform der Erfindung ist das Lesegerät zur Verifikation des Dokuments mit Hilfe der von der Anzeigevorrichtung erfassten zweiten Daten ausgebildet. Beispielsweise vergleicht das Lesegerät die erfassten zweiten Daten mit einer Referenz-Information. Eine hinreichende Übereinstimmung zwischen den zweiten Daten und der Referenzinformation ist dabei eine Voraussetzung dafür, dass das Dokument als echt anerkannt wird. Nach einer Ausführungsform ist die Referenzinformation auf das Dokument sichtbar aufgebracht; insbesondere kann es sich hierbei um die Personalisierungsinformationen wie Name und Ausweisnummer handeln. Auf diese Weise werden die Personalisierungsinformationen gegen Manipulation geschützt.

Nach einer Ausführungsform der Erfindung hat das Lesegerät Mittel zur Ausführung des kryptographischen Protokolls mit Hilfe der zweiten Daten. Bei den zweiten Daten handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort schutzbedürftige Daten auszulesen.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen.

In einem weiteren Aspekt betrifft die Erfindung ein Verfahren zur Verifikation eines Dokuments. Zur Verifikation des Dokuments wird das Muster von der Anzeigevorrichtung erfasst, um die zweiten Daten zu empfangen. Die zweiten Daten werden zur Prüfung der Echtheit des Dokuments mit einer Referenzinformation verglichen. Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemä- ßen Dokuments,
- Figur 2: eine schematische Draufsicht auf eine Black Matrix mit einem Mus- ter,
- Figur 3: eine schematische Draufsicht auf eine Ausführungsform eines er- findungsgemäßen Dokuments,
- Figur 4: ein Blockdiagramm einer weiteren Ausführungsform eines erfin- dungsgemäßen Dokuments.

Elemente der nachfolgenden Ausführungsformen, die einander entsprechen, sind mit denselben Bezugszeichen gekennzeichnet.

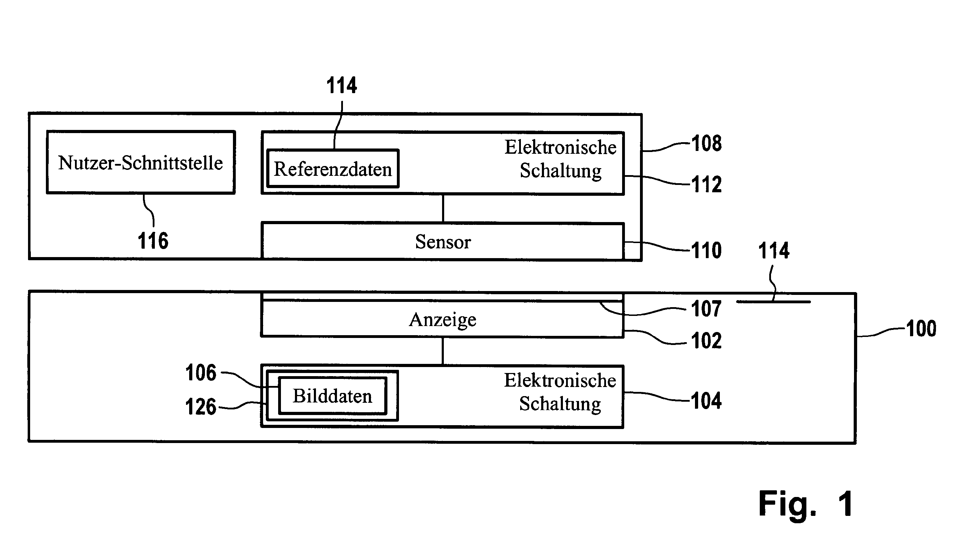

Die Figur 1 zeigt ein Dokument 100 mit einer in den Dokumentenkörper des Dokuments 100 integrierten Anzeige 102 und eine elektronische Schaltung 104 zur Ansteuerung der Anzeige 102. Die Anzeige 102 beinhaltet eine Vielzahl von Anzeigeelementen, die beispielsweise matrixförmig angeordnet sein können. Insbesondere kann es sich bei der Anzeige 102 um eine Passiv- oder um eine Aktiv-Matrixanzeige handeln.

Die elektronische Schaltung 104 beinhaltet ein oder mehrere elektronische Speicher 126 zur Speicherung von ersten Daten 106. Die elektronische Schaltung 104 kann auf die Daten 106 zugreifen.

Zur Wiedergabe der Daten 106 auf der Anzeige 102 greift die elektronische Schaltung 104 auf die Daten 106 zu, und steuert die Anzeige dem entsprechend an. Bei den Daten 106 kann es sich zum Beispiel um Bilddaten handeln. Unter "Bilddaten" werden hier Daten verstanden, die sich zur Wiedergabe auf der Anzeige 102 eignen, das heißt zum Beispiel eine digitale Fotografie, textuelle Angaben, ein Kennzeichen, insbesondere ein Kraftfahrzeugkennzeichen, ein Fahrzeugparameter und/oder ein Gebührenstatus oder dergleichen. Die Bilddaten können auch eine Bildsequenz beinhalten, wobei die Bildsequenz z.B. mehrere Gesichtsbilder aus verschiedenen Ansichten aufweisen kann.

Die Anzeige 102 hat eine Black Matrix 107 mit einem Muster. In dem Muster können Daten kodiert sein. Die Daten können ein oder mehrere Informationen beinhalten, wie zum Beispiel Personalisierungsinformationen, ein Sicherheitsmerkmal, einen kryptographischen Schlüssel, ein Kennzeichen, ein Fahrzeugparameter und/oder ein Gebührenstatus. Insbesondere kann es sich hierbei um benutzerspezifische Informationen, wie zum Beispiel Informationen über den Träger des Dokuments handeln und/oder Daten bezüglich der Gültigkeit des Dokuments, der ausstellenden Behörde oder dergleichen.

Das Lesegerät 108 hat einen optischen Sensor 110, wie zum Beispiel einen CCD-Sensor oder einen optischen Scanner. Der Sensor 110 ist dazu ausgebildet, das Muster von der Anzeigevorrichtung zu erfassen.

Der Sensor 110 ist mit einer elektronischen Schaltung 112 des Lesegeräts 108 verbunden. Durch die elektronische Schaltung 112 ist ein Dekoder implementiert. Der Dekoder dient zur Dekodierung des Musters, um die in den zweiten Daten beinhaltete Information zu empfangen.

Das Lesegerät 108 hat ferner eine Nutzerschnittstelle 116. Alternativ oder zusätzlich kann das Lesegerät 108 auch eine Schnittstelle zu einem Computer und/oder einem Netzwerk aufweisen.

Wenn die Information durch Dekodierung des Musters von dem Lesegerät 108 empfangen worden ist, wird die Information beispielsweise über die Nutzerschnittstelle 116 ausgegeben.

Beispielsweise handelt es sich bei der Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformation kann also eine Prüfung der Echtheit des Dokuments erfolgen, da die durch das Lesegerät 100 von dem Muster der Black Matrix erfasste Information mit der auf dem Aufdruck 114 gezeigten Personalisierungsinformation übereinstimmen muss.

Bei der Information kann es sich auch um ein Wappen, Siegel oder ein anderes Sicherheitsmerkmal handeln. Nach Erfassung des Musters wird es mit einer in der elektronischen Schaltung 112 gespeicherten Referenzinformation verglichen. Wenn die optisch empfangene Information mit der Referenzinformation hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Bei der Information, die als Teil der Daten 106 von der elektronischen Schaltung 104 über die Anzeige 102 ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den Daten 106 kann es sich hier um das amtliche Kraftfahrzeug-Kennzeichen handeln. Auf der Anzeige 102 wird also visuell sichtbar das amtliche KraftfahrzeugKennzeichen ausgegeben sowie zusätzlich eine oder mehrere weitere Informationen. Bei dieser Ausführungsform kann eine Aktualisierung des amtlichen Kennzeichens dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches die Daten 106 dann mit den empfangenen Daten überschreibt.

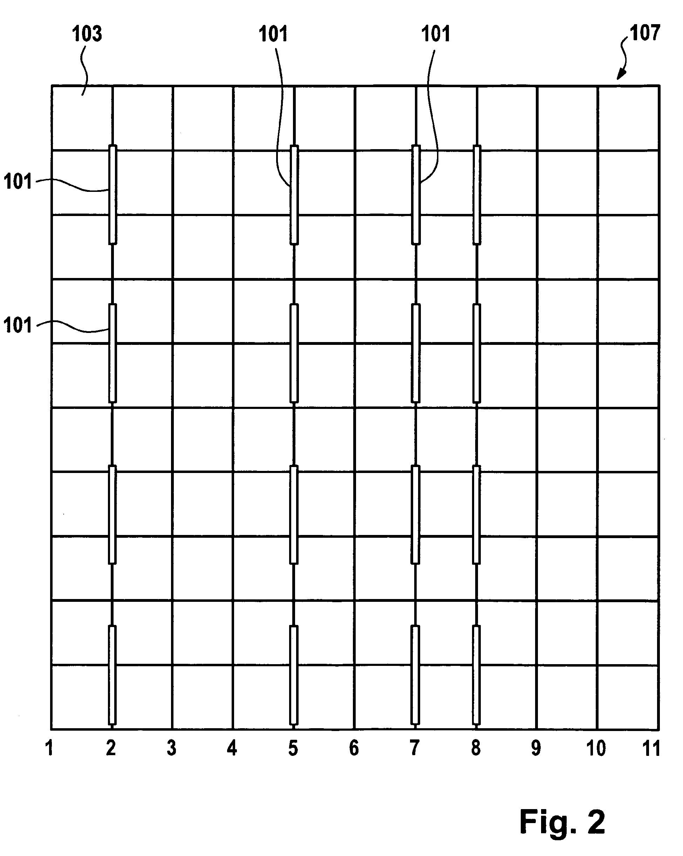

Die Figur 2 zeigt eine Ausführungsform einer erfindungsgemäßen Black Matrix 107. Jedes Matrixelement der Black Matrix 107 umfasst ein Anzeigeelement 103, so dass die Zwischenräume zwischen den Anzeigeelementen 103 überdeckt werden. Abweichend vom Stand der Technik ist die Black Matrix 107 nicht durchgehend Schwarz eingefärbt, sondern sie trägt ein Muster, welches hier durch Abschnitte 101 der Black Matrix 107 gebildet wird. Die Abschnitte 101 haben einen von Schwarz abweichenden reduzierten Grauwert. Durch den Grauwert, die Länge, Form und/oder räumliche Anordnung der Abschnitte 101 kann eine Information in dem durch die Abschnitte 101 gebildeten Muster codiert sein.

Beispielsweise hat die Black Matrix eine Anzahl von n vertikal verlaufenden Linien zur Bildung der Spalten der Anzeige 102. In dem hier betrachteten Beispiel ist n = 11 für eine Matrix von 10 x 10 Anzeigeelementen 103.

Diejenigen vertikalen Linien der Black Matrix 107, die keine Abschnitte 101 aufweisen, repräsentieren beispielsweise eine logische Null, wohingegen diejenigen Linien der Black Matrix 107, die die Abschnitte 101 aufweisen, eine logische Eins repräsentieren. Daher repräsentiert beispielsweise die Linie 1 eine logische Null und die Linie 2 eine logische Eins. Insgesamt ist also in dem Muster der Black Matrix 107, welches durch die Abschnitte 101 gebildet wird, die Information "01001011000" codiert.

Alternativ kann die Black Matrix 107 auch einen Farbton aufweisen, wobei die Abschnitte 101 Farbwerte aufweisen, die von diesem Farbton der Black Matrix 107 abweichen. Aufgrund des Farbtons der Black Matrix 107 ergibt sich eine Farbstichigkeit der Anzeige 102, welche durch eine entsprechend korrigierte Ansteuerung der Anzeigeelemente 103 durch die elektronische Schaltung 104 (vgl. Figur 1) kompensiert wird.

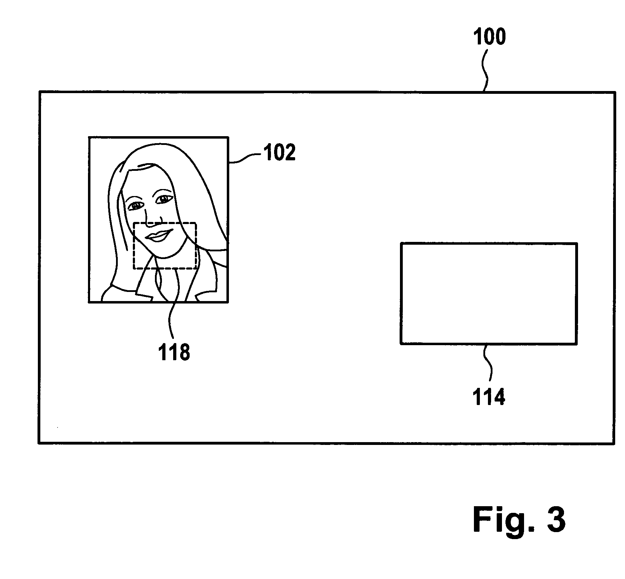

Die Figur 3 zeigt eine Draufsicht auf eine Ausführungsform des Dokuments 100. Das Dokument 100 ist hier kartenförmig ausgebildet. Die Daten 106 beinhalten bei dieser Ausführungsform ein digitales Gesichtsbild eines Trägers des Dokuments 100, das auf der Anzeige 102 wiedergegeben wird. Das Muster der Black Matrix 107 erstreckt sich hier nur über einen Teilbereich 118 der Anzeige 102. In dem Muster ist zumindest ein Teil der Daten kodiert, welche der Aufdruck 114 zeigt. Dadurch, dass sich das Muster nur über den Teilbereich 118 erstreckt, wird die Fälschungssicherheit weiter erhöht, da ein Fälscher nicht weiß, wo sich dieser Teilbereich befindet.

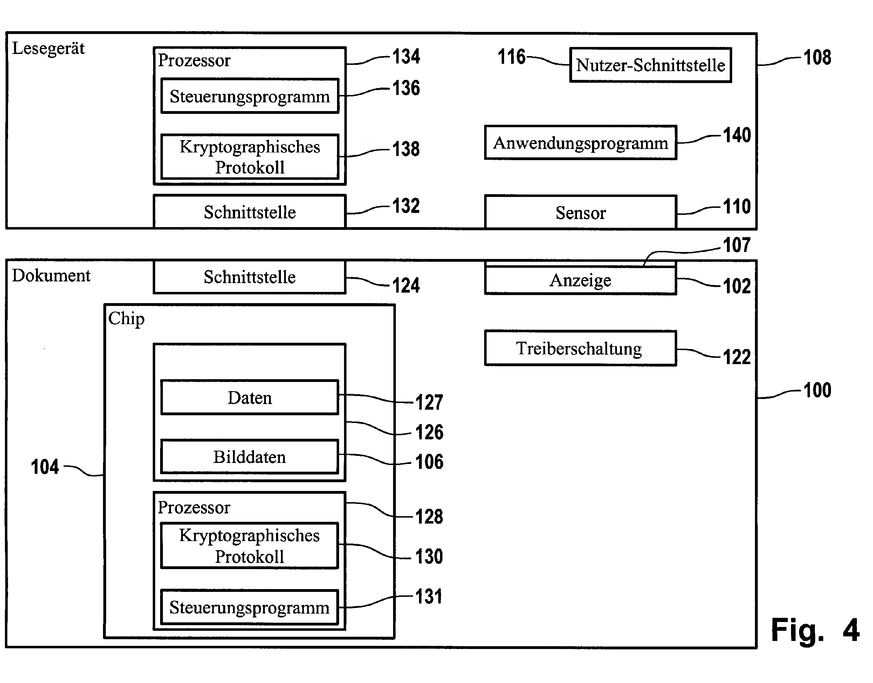

Die Figur 4 zeigt eine weitere Ausführungsform des Dokuments 100 und des Lesegeräts 108.

Das Dokument 100 hat eine Treiberschaltung 122 zur Ansteuerung der Anzeige 102. Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die z.B. in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten, Iris-Scandaten oder dergleichen handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 gespeichert. Die Schaltung 104 hat ferner einen Prozessor 128 zur Ausführung von Programminstruktionen 130, durch welche die das Dokument 100 betreffenden Schritte eines kryptographischen Protokolls implementiert werden. Der Prozessor 128 dient ferner zur Ausführung von Programminstruktionen 131, die ein Steuerungsprogramm implementieren.

Das Lesegerät 108 hat einen optischen Sensor 110 zur Erfassung des Musters der Black Matrix 107 von der Anzeige 102. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine

RFID-Kommunikation mit dem Dokument 100 bzw. dessen Schaltung 104 ausgebildet. Die Schnittstellen 124, 132 können kontaktbehaftet, kontaktlos oder als so genannte Dual-Mode-Interfaces ausgebildet sein. Die Schnittstellen können auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Die elektronische Schaltung 112 (vgl. Fig. 1) des Dokument 108 beinhaltet zumindest einen Prozessor 134 zur Ausführung eines Steuerungsprogramms 136 sowie von Programminstruktionen 138, durch welche die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es die Treiberschaltung 122 zur Wiedergabe der Daten 106 ansteuert. Falls die Black Matrix 107 einen von Schwarz abweichenden Farbton hat und/oder wenn die Abschnitte 101 der Black Matrix 107 farbig sind, kann das Steuerungsprogramm so ausgebildet sein, dass es die von den Anzeigeelementen 103 der Anzeige 102 abzugebenden Lichtintensitäten modifiziert, um den Farbstich der Anzeige 102 zu kompensieren. Alternativ können die Daten 106 bereits in einer modifizierten Form in dem Speicher 126 gespeichert sein, wobei aufgrund der Modifikation der Daten 106 der Farbstich der Anzeige 102 kompensiert wird.

Zum Zugriff auf die Daten 127 des Speichers 126 erfasst das Lesegerät 108 zunächst mittels seines optischen Sensors 110 die Anzeige 102. Hierzu wird der Sensor 110 entsprechend von dem Steuerungsprogramm 136 angesteuert. Das Steuerungsprogramm 136 dekodiert das von dem Sensor 110 erfasste Muster der Black Matrix 107, um so die in dem Muster kodierte Information zu empfangen. Auf diese Art und Weise erhält das Steuerungsprogramm 136 Kenntnis des kryptographischen Schlüssels.

Nach der Erfassung des kryptographischen Schlüssels aus dem Muster startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten 127 an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor empfangenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

### Bezugszeichenliste

- 100: Dokument
- 101: Abschnitt
- 102: Anzeige
- 103: Anzeigeelement
- 104: Schaltung
- 106: Daten
- 108: Lesegerät
- 110: Sensor
- 112: Schaltung
- 114: Aufdruck
- 116: Nutzerschnittstelle
- 118: Teilbereich
- 122: Treiberschaltung
- 124: Schnittstelle
- 126: Speicher
- 127: Daten
- 128: Prozessor
- 130: Programminstruktionen
- 131: Programminstruktionen
- 134: Prozessor
- 136: Steuerungsprogramm
- 138: Programminstruktionen
- 140: Anwendungsprogramm

## Patentansprüche

1. Dokument mit einer integrierten Anzeigevorrichtung (102), einem elektronischen Speicher zur Speicherung erster Daten (106), und Ansteuerungsmitteln (104; 122) zur Ansteuerung der Anzeigevorrichtung für eine Wiedergabe der ersten Daten, und mit einer Black Matrix (107), angeordnet and der Anzeigevorrichtung (102), **dadurch gekennzeichnet, dass** auf der Black Matrix ein Muster ausgebildet ist, wobei das Muster durch lokale Variationen (101) des Farbwerts der Black Matrix gebildet wird, wobei die Ansteuerungsmittel zur Kompensation eines durch einen Farbwert der Black Matrix und/oder durch die lokalen Variationen (101) des Farbwerts hervorgerufenen Farbstiches ausgebildet sind.

2. Dokument nach Anspruch 1, wobei das Muster durch lokale Variationen (101) des Grauwerts der Black Matrix gebildet wird.

3. Dokument nach einem der vorhergehenden Anspruch, wobei es sich bei dem Muster um ein Sicherheitsmerkmal handelt.

4. Dokument nach einem der vorhergehenden Ansprüche, wobei sich das Muster nur auf einen Teilbereich (118) der Black Matrix erstreckt.

5. Dokument nach einem der vorhergehenden Ansprüche, wobei in dem Muster zweite Daten codiert sind und wobei die zweiten Daten eine Personalisierumgsinformation und/oder einen kryptographischen Schlüssel beinhalten.

6. Dokument nach einem der vorhergehenden Ansprüche, mit einem geschützten Speicherbereich zur Speicherung dritter Daten (127) und mit Mitteln (130) zur Ausführung eines kryptographischen Protokolls und mit einer Schnittstelle (124) zu einem Lesegerät (108), wobei ein Zugriff des Lesegeräts auf die drit ten Daten über die Schnittstelle die Ausführung des kryptographischen Protokolls mit Hilfe eines in dem Muster codierten oder aus diesen ableitbaren kryptographischen Schlüssels voraussetzt.

7. Dokument nach einem der vorhergehenden Ansprüche, wobei es sich um ein Wert- oder Sicherheitsdokument handelt und/oder wobei es sich um ein elektronisches Kraftfahrzeugkennzeichen handelt.

8. Dokument nach einem der vorhergehenden Ansprüche, mit einer Schnittstelle, wobei die Schnittstelle zum Empfang einer auf der Anzeigevorrichtung wiederzugebenden Information ausgebildet ist.

9. Dokument nach Anspruch 8, wobei die Schnittstelle zum Empfang der ersten Daten von einem Kraftfahrzeug-Etektronikgerät ausgebildet ist, wobei es sich bei den ersten Daten um ein Kennzeichen eines Fahrzeugs, um einen Fahrzeugparameter und/oder einen Gebührenstatus handelt.

10. Dokument nach Anspruch 5, wobei sowohl die ersten Daten als auch die zweiten Daten ein identisches Kraftfahrzeugkennzeichen beinhalten.

11. System aus einem Lesegerät und einem Dokument nach einem der vorhergehenden Ansprüche, mit einem optischen Sensor (102) zur maschinellen Erfassung des Musters.

12. System nach Anspruch 11, mit Mitteln (136) zur Verifikation des Dokuments mit Hilfe des von dem optischen Sensor erfaßten Musters.

13. System nach Anspruch 11 oder 12, mit Mitteln (138) zur Ausführung eines kryptographischen Protokolls und einer Schnittstelle (132) zur Kommunikation mit dem Dokument, wobei ein Zugriff auf die dritten Daten (127) des Dokuments voraussetzt, dass das kryptographische Protokoll mit Hilfe der in dem Muster kodierten zweiten Daten erfolgreich durchgeführt worden ist.

14. Verfahren zur Verifikation eines Dokuments nach Anspruch 5 mit folgenden Schritten:
- bereitstellen des Dokuments,
- maschinelle Erfassung des Musters zum Empfang der zweiten Daten,
- Vergleich der zweiten Daten mit einer Referenz-Information (114).

## Claims

1. Document comprising an integrated display device (102), an electronic memory for storing first data (106), and control means (104; 122) for controlling the display device in order to reproduce the first data, and comprising a black matrix (107) arranged on the display device (102), **characterized in that** a pattern is formed on the black matrix, the pattern being formed by means of local variations (101) of the colour value of the black matrix, the control means being designed to compensate for a colour cast caused by a colour value of the black matrix and/or by the local variations (101) of the colour value.

2. Document according to Claim 1, the pattern being formed by means of local variations (101) of the grey-scale value of the black matrix.

3. Document according to one of the preceding claims, the pattern being a security feature.

4. Document according to one of the preceding claims, the pattern extending only over a section (118) of the black matrix.

5. Document according to one of the preceding claims, second data being coded in the pattern, and the second data comprising an item of personalization information and/or a cryptographic key.

6. Document according to one of the preceding claims, having a protected memory area for storing third data (127) and having means (130) for executing a cryptographic protocol and having an interface (129) to a reader (108), access to the third data by the reader via the interface presupposing the execution of the cryptographic protocol with the aid of a cryptographic key which is coded in the pattern or can be derived from the latter.

7. Document according to one of the preceding claims, said document being a valuable or security document and/or said document being an electronic motor vehicle registration.

8. Document according to one of the preceding claims, having an interface, the interface being designed to receive an item of information to be reproduced on the display device.

9. Document according to Claim 8, the interface being designed to receive the first data from a motor vehicle electronic unit, the first data being a vehicle registration, a vehicle parameter and/or a charge status.

10. Document according to Claim 5, the first data and the second data comprising an identical motor vehicle registration.

11. System comprising a reader and a document according to one of the preceding claims, having an optical sensor (102) for detecting the pattern by machine.

12. System according to Claim 11, having means (136) for verifying the document with the aid of the pattern which is detected by the optical sensor.

13. System according to Claim 11 or 12, having means (138) for executing a cryptographic protocol and an interface (132) for communicating with the document, access to the third data (127) of the document presupposing that the cryptographic protocol has been successfully executed with the aid of the second data coded in the pattern.

14. Method for verifying a document according to Claim 5, having the following steps of:
- providing the document,
- detecting the pattern by machine for the purpose of receiving the second data,
- comparing the second data with an item of reference information (114).

## Revendications

1. Document comprenant un dispositif d'affichage intégré (102), une mémoire destinée à stocker des premières données (106), et des moyens de commande (104 ; 122) destinés à commander le dispositif d'affichage afin de reproduire les premières données, et comprenant une matrice noire (107) disposée sur le dispositif d'affichage (102), **caractérisée en ce qu'**un motif est formé sur la matrice noire, dans lequel le motif est formé par des variations locales (101) du niveau de couleur de la matrice noire, dans lequel les moyens de commande sont conçus pour compenser une table de couleurs indexée par un niveau de couleur de la matrice noire et/ou par les variations locales (101) de niveau de couleur.

2. Document selon la revendication 1, dans lequel le motif est formé par des variations locales (101) du niveau de gris de la matrice noire.

3. Document selon l'une des revendications précédentes, **caractérisé en ce que** le motif est un signe de sécurité.

4. Document selon l'une des revendications précédentes, dans lequel le motif ne s'étend que sur une région partielle (118) de la matrice noire.

5. Document selon l'une des revendications précédentes, dans lequel des deuxièmes données sont codées dans le motif et dans lequel les deuxièmes données contiennent une information de personnalisation et/ou une clé cryptographique.

6. Document selon l'une des revendications précédentes, comprenant une zone de mémoire protégée destinée stocker des troisièmes données (127) et des moyens (130) destinés à exécuter un protocole cryptographique et comprenant une interface (124) destinée à un appareil de lecture (108), un accès de l'appareil de lecture aux troisièmes données par l'intermédiaire de l'interface ayant pour effet que le protocole cryptographique est exécuté à l'aide d'une clé cryptographique codée dans le motif ou pouvant en être déduite.

7. Document selon l'une des revendications précédentes, dans lequel ledit document est un document de valeur ou de sécurité et/ou dans lequel ledit document est un numéro d'immatriculation électronique de véhicle.

8. Document selon l'une des revendications précédentes, comprenant une interface, dans lequel l'interface est conçue pour recevoir une information devant être reproduite sur le dispositif d'affichage.

9. Document selon la revendication 8, dans lequel l'interface est conçue pour recevoir les premières données d'un appareil électronique de véhicule, dans lequel les premières données sont un numéro d'immatriculation de véhicule, un paramètre de véhicule et/ou un statut fiscal.

10. Document selon la revendication 5, dans lequel les premières données ainsi que les deuxièmes données contiennent des données d'immatriculation de véhicule identiques.

11. Système constitué d'un appareil de lecture et d'un document selon l'une des revendications précédentes, comprenant un capteur optique (102) pour la reconnaissance automatique du motif.

12. Système selon la revendication 11, comprenant des moyens (136) destinés à vérifier le document à l'aide du motif détecté par le capteur optique.

13. Système selon la revendication 11 ou 12, comprenant des moyens (138) destinés à exécuter un protocole cryptographique et une interface (132) destinée à communiquer avec le document, dans lequel un accès aux troisièmes données (127) du document a pour effet que le protocole cryptographique est exécuté de façon effective à l'aide des deuxièmes données codées dans le motif.

14. Procédé de vérification d'un document selon la revendication 5, comprenant les étapes suivantes :
- mettre à disposition le document,
- détecter de manière automatique le motif pour recevoir les deuxièmes données,
- comparer les deuxièmes données à une information de référence (114).
